Europäisches Patentamt

European Patent Office

Office européen des brevets

(11) Publication number : **0 449 573 A2**

# (12) EUROPEAN PATENT APPLICATION

(21) Application number : 91302619.1

(51) Int. Cl.⁵ : G01N 21/39, H01S 3/133

(22) Date of filing : 26.03.91

(30) Priority : 27.03.90 JP 78498/90
10.07.90 JP 183667/90
18.09.90 JP 246331/90

(43) Date of publication of application :
02.10.91 Bulletin 91/40

(84) Designated Contracting States :
DE FR GB IT NL

(71) Applicant : TOKYO GAS CO., LTD.
5-20, Kaigan 1-chome
Minato-ku Tokyo 105 (JP)

(72) Inventor : Uehara, Kiyoji
2-6-10 Fukagawa, Koto-ku,
Tokyo 135 (JP)
Inventor : Tanaka, Hiroaki
5-17-25 Midori-cho, Koganei-shi
Tokyo 184 (JP)
Inventor : Matsuura, Masayuki
6-39-3 Shiraitodai, Fuchu-shi
Tokyo 183 (JP)
Inventor : Tai, Hideo
1-48-6-806 Higashi-Ikebukuro, Toshima-ku
Tokyo 170 (JP)

(74) Representative : Lawrence, John Gordon et al
McNeight & Lawrence Regent House Heaton
Lane
Stockport, Cheshire SK4 1BS (GB)

(54) Gas detection device.

(57)    There is disclosed a gas detection device comprising :-
a laser which generates a laser beam of a wave length and intensity corresponding to a drive current and the temperature ;
a laser drive circuit which modulates the drive power source of the laser at a specified amplitude centered around a specified temperature and a specified current value ;
a means of stabilizing the wavelength by which the central wavelength of the laser beam generated by the laser is stabilized at a specific position on a special gas absorption line ;
a beam detection apparatus which detects the intensity of the laser beam after the laser beam passes through the measuring object gas atmosphere ; and
a measuring means which performs a quantitative measurement of a specific gas based on the output of the beam detection apparatus.

EP 0 449 573 A2

## BACKGROUND OF THE INVENTION

### 1. Field of the Invention

The present invention relates to a gas detection device using a semiconductor laser, and, in particular, to a gas detection device suitable for remote quantitative gas concentration measurements.

### 2. Description of the Prior Art

Methods of detecting the presence of a gas, utilizing the tendency of certain gases to absorb laser beams of specific wave lengths, are commonly known. Sensing technology which applies this principle is widely used in industrial measurements, pollution monitoring, and the like. For example, there are two oscillation lines of the vacuum wave lengths 3.3922 $\mu$m ($\lambda_1$) and 3.3912 $\mu$m ($\lambda_2$) in the 3.39 $\mu$m band of a laser beam generated by an He-Ne laser. $\lambda_1$ is strongly absorbed by methane, while $\lambda_2$ is only slightly absorbed by methane. Accordingly, it is possible to detect the presence of methane with good sensitivity using the difference between the strengths of the transmitted light when laser beams of two wave lengths of the same intensity strike the gas being measured. Methane is the main component of city gas, so such a detection system makes it possible to detect leaks of city gas by detecting the methane gas.

A methane leak sensor of this type is disclosed in US Patent No. 4,489,239. In addition to two lasers, this sensor requires two choppers and two lock-in amplifiers, which makes the device rather large. At the same time, this US patent also proposes a laser system using a two-wave-length oscillating laser capable of eliminating the drawbacks of this sensor. However, problems remain, such as the difficulty in maintaining a completely uniform output at the two wavelengths, which causes temperature fluctuations.

Another method uses one mechanical chopper, and also proposes a method of adjusting the output of the two wave lengths from two lasers equally. However, a methane detection system with this type of structure uses many mirrors and half-mirrors, making the optical system very complicated. In addition, adjustment of the optical axis is troublesome, and the laser beam loss is large. Further, there are problems inasmuch as the signal processing is complicated, and there are other disadvantages such as an S/N (signal/noise) ratio at which modulation cannot be accomplished at high frequencies because the mechanical chopper is used.

Accordingly, the inventors of the present invention, in Japanese Laid Open Patent Application 62-290190, proposed a novel two-frequency oscillation laser device which, in particular, eliminates the drawbacks of the laser device used in the abovementioned conventional gas detection systems. This two-frequency oscillation laser device uses a special gas and a reference cell which includes a semiconductor laser in which the wavelength and output correspond to the drive current. The semiconductor laser is driven by two different currents, centering around a specific current, so that the laser beam oscillates alternately at two different wavelengths. Feedback is provided to the driving current so that the intensity of the laser beam is uniform. Gas can be detected with this concise structure in which one laser device is used.

However, with this method, the wavelength of the laser beam is stabilized in a position which differs from the center of the absorption line of the special gas. Also, because the laser beam has already been considerably damped by the reference cell, highly sensitive gas detection is not possible. In the case where gas detection is implemented using the reflection of the laser beam from an arbitrary target, even with the same amount of gas, when the reflection conditions vary different indicated values are produced, so there is the problem that quantitive measurements are not possible.

In order to carry out remote quantitative gas concentration measurements using this type of gas detection device, the laser beam first passes through an atmosphere of the object gas, then strikes an arbitrary target on a reflecting surface. The laser beam reflected from this target is detected, and the concentration of the object gas within the gas in the measurement atmosphere is measured. In particular, in a portable model, the laser generation module must be reduced in size. With a conventional laser generation module, the laser beam from the laser beam source is directed via a mirror toward the gas in the measurement atmosphere. This reflected laser beam is received by a convergent lens, but when the laser beam source and the convergent lens are positioned close together to reduce the size of the device, the optical axis of the laser beam and the optical axis of the convergent lens differ so that only a part of the reflected laser beam can be condensed. The condensing efficiency, therefore, is extremely bad. Accordingly, in order to'improve the condensing efficiency, the provision of several stages of mirrors, and positioning the reflected laser beam as close as possible to the optical axis of the convergent lens are methods which have been considered, but with these methods it is necessary to make many minute adjustments to the angles of the mirrors, so that assembly and adjustment are troublesome.

## SUMMARY OF THE INVENTION

A first object of the present invention is to provide, with due consideration to the drawbacks of such conventional devices, a highly sensitive gas detection device using a semiconductor laser modulated at high frequencies.

The inventors of the present invention observed that in a semiconductor laser, the laser beam is emitted on both the front and rear sides. By using the front emitted laser beam in gas detection, and by using the rear emitted laser beam to stabilize the frequency, a small laser generation module with a high condensing efficiency can be provided

A second object of the present invention is to provide a gas detection device using a small laser generation module with a high condensing efficiency

The first object is achieved in the present invention by the provision of a structure wherein, using a semiconductor laser which generates a laser beam in which the wavelength and output correspond to the driving current, a laser beam is generated for which the wavelength and intensity are modulated by modulating the driving current at a special frequency centered around a specific current, and either one or both of the drive signal and temperature of a semiconductor laser is controlled so that the modulation frequency of the fundamental wave detection signal or double wave detection signal becomes 0. This laser beam is then passed through a measuring atmosphere which includes a gas of unknown concentration, and the gas concentration is detected by the double wave detection signal or by the base wave detection signal,.

The second object is achieved in the present invention by the provision of a gas detection device comprising, on one side of a semiconductor laser, a collimator lens for converting a laser beam into parallel beams; on the opposite side, a reference gas cell in which is sealed the gas which is the measurement object; a beam detection apparatus which detects the intensity of a laser beam passing through the reference gas cell; a laser generation module provided with an adjusting means for adjusting the direction of a laser beam emitted by the module, with the collimator lens displaced in a plane at right angles to the optical axis; and a beam detection means which detects the intensity of a reflected laser beam from a condensing lens on the reflected side which is the direction of the laser beam emitted from the laser generation module mounted at the center of the condensing lens.

## BRIEF DESCRIPTION OF ACCOMPANYING DRAWINGS

These and other objects, features, and advantages of the present invention will become more apparent from the following description of the preferred embodiments taken in conjunction with the accompanying drawings, in which:

FIG.1A is a graph of the absorption spectrum of methane.

FIG.1B is an enlarged view of part of the absorption spectrum of methane.

FIG.2A is a graph of a transmission factor based on the absorption of methane.

FIG.2B is a first derivative signal of the methane absorption line shown in FIG. 2A.

FIG.2C is a second derivative signal of the same methane absorption line.

FIG.3 is a graph showing the phase sensitivity detection output of the methane absorption curve.

FIGs.4A, 4B, 4C are graphs showing detection signals and measured results from the present invention.

FIG.5 is a block diagram of an embodiment of the gas detection device of the present invention.

FIG.6 is a block diagram of a modification of a part of the embodiment of the gas detection device shown in FIG.5.

FIG.7 is a waveform diagram of a double wave detection signal for methane

FIG.8 is a methane detection signal by double wave detection.

FIG.9 is a block diagram of another embodiment of the gas detection device of the present invention.

FIG.10 is a section view of yet another embodiment of the gas detection device of the present invention.

FIG.11 is a section view of a laser generation module used in the embodiment of the present invention shown in FIG.10.

FIG.12 is an external perspective view of the laser generation module shown in FIG.11.

## DETAILED DESCRIPTION OF THE PREFERRED EMBODIMENTS

Prior to explaining the invention itself, the basic features which are essential for an understanding of the invention will be outlined.

(1) Method of modulating frequency

One method of improving measurement sensitivity in spectrometry is the technique known as frequency modulation. The frequency of light can be modulated by many different means. When light passes through a target absorbent gas the output signal from an infrared sensor which receives the gas has a direct current component as well as a fundamental wave component the same as the modulated frequency and its higher harmonic component. Of these, when the fundamental wave component and the double wave component are used for phase sensitivity detection, signals can be obtained which correspond to the first derivative and the second derivative of the frequencies of the respective absorption lines. Here, phase sensitivity detection is defined as extracting components of the signals with a specific frequency and with a specifc phase and measuring the amplitude. A reference signal of the same frequency and a device called a lock-in amplifier are used. When this technique is used, the detection of extremely small signals is usually possible at an extremely high S/N ratio.

Now, the characteristics of the signal obtained by the frequency modulation method will be explained taking as an example the case where methane is detected with a semiconductor laser as the light source.

As is commonly known, the transmission factor T of a laser beam can be expressed as:

$$T = \exp(-\alpha c \ell) \quad (1)$$

where c is the concentration of methane (partial pressure) and is the optical path length. The absorption coefficient of methane is $\alpha$. At atmospheric pressure it is seen that one absorption line has Lorentz-type frequency-dependent characteristics as follows.

$$\alpha = \frac{\gamma^2 \alpha_0}{(\Omega - \omega_m)^2 + \alpha^2} \quad \ldots\ldots\ldots(2)$$

where

$\Omega$      :beam frequency

$\omega_m$      :central frequency of absorption line

$\alpha_0, \gamma$      :constants

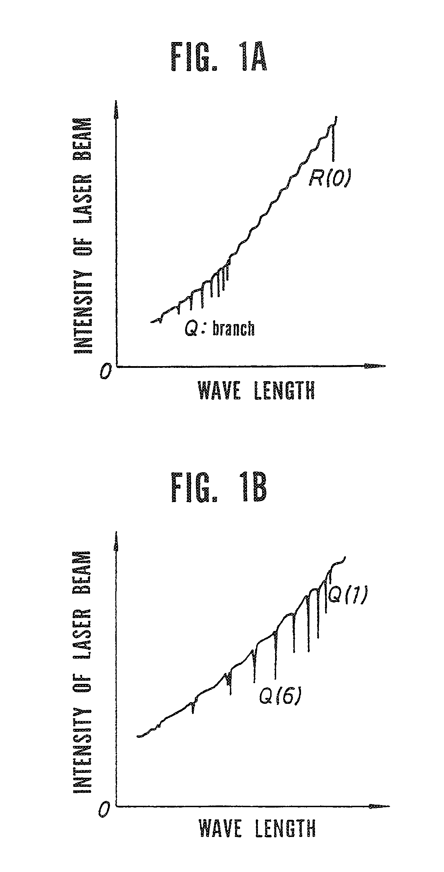

FIG.1A is the absorption spectrum of the 2 $\nu_2$ band of methane close to 1.665 μm, observed using a semiconductor laser. FIG.1B is an enlarged of part of this line in the case of the Q(6) line of wavelength 1.665 μm, where the central frequency $\omega_m$m is about $1.800 \times 10^{14}$ Hz (at a displayed wave number of 6002.6 cm$^{-1}$). Here, $2\gamma$ represents the half-value width of the absorption line, which for methane under one atmosphere of pressure is about $4 \times 10^9$ Hz (0.13 cm$^{-1}$). Also, $\alpha_0$ represents the absorption coefficient at the center of the absorption line. The value of $\alpha_0$ for the Q(6) line under one atmosphere of pressure is 16 m$^{-1}$.atm$^{-1}$.

When $\alpha c \ell < 1$, from equation (1) and (2)

$$T = 1 - \alpha c \ell = 1 - \frac{\gamma^2 \alpha_0 c \ell}{(\Omega - \omega_m)^2 + \gamma^2} \quad \ldots\ldots\ldots(3)$$

as a close approximation.

The oscillation frequency $\Omega$ of the semiconductor laser bears a relationship to the temperature and the drive current, but at a uniform temperature when the drive current is modulated at the frequency $\omega$, $\Omega$ is modulated at the frequency $\omega$ according to the following equation.

$$\Omega = \Omega_0 + \Delta\Omega \cos \omega t \quad (4)$$

where

$\Omega_0$      :central frequency of semiconductor laser

$\Delta\Omega$      :frequency modulation amplitude

$\omega$      :modulation frequency

Because the frequency modulation amplitude $\Delta\Omega$ is small, when T, by a Taylor expansion with $\Omega = \Omega_0$ is calculated to the second term,

$$T = T_0 + \frac{(\Delta\Omega)^2}{4} T_0{}' + \Delta\Omega\, T_0{}' \cos\omega\, t + \frac{(\Delta\Omega)^2}{4} T_0{}'' \cos 2\omega\, t \ ..\ (5)$$

is obtained and, in addition to the direct current component, components transformed according to $\cos\omega\, t$ and $\cos 2\omega\, t$ are obtained. Here, $T_0$, $T_0{}'$, and $T_0{}''$ are respectively the transmission factor T, the first derivative $dT/d\Omega$, and the second derivative $d^2T/d\Omega^2$ for the value $\Omega = \Omega_0$. The following equations are obtained.

$$T_0 = 1 - \frac{\gamma^2\, \alpha_0\, c\ell}{(\Omega_0 - \omega_m)^2 + \gamma^2} \qquad \ldots\ldots\ldots\ldots(6)$$

$$T_0{}' = \frac{2(\Omega_0 - \omega_m)\, \gamma^2\, \alpha_0\, c\ell}{[(\Omega_0 - \omega_m)^2 + \gamma^2\,]^2} \qquad \ldots\ldots\ (7)$$

$$T_0{}'' = \frac{-2\,[\,3\,(\Omega_0 - \omega_m)^2 - \gamma^2\,]\, \gamma^2\, \alpha_0\, c\ell}{[(\Omega_0 - \omega_m)^2 + \gamma^2\,]^3} \ ..\ (8)$$

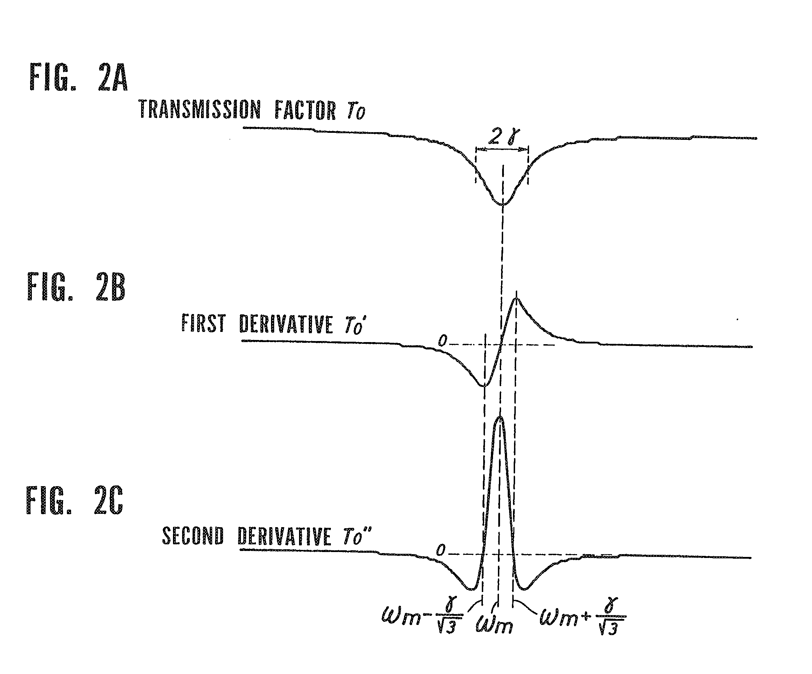

The respective curves for $T_0$, $T_0{}'$, and $T_0{}''$ are shown in FIGs.2A, 2B, and 2C. In equation (5), which gives the transmission factor T, if the $\cos\omega\, t$ and $\cos 2\omega\, t$ components are phase sensitivity detections, then signals proportional to $T_0{}'$, and $T_0{}''$ are obtained.

As is clearly shown in FIGs.2A, 2B, and 2C, when the central frequency $\Omega_0$ of the laser and the central frequency of absorption line $\omega_m$ are in agreement, $T_0$ is a minimum, $T_0{}' = 0$, and $T_0{}''$ is a maximum. Specifically, the following equations can be obtained from equations (6), (7), and (8).

$$T_0\,(\Omega_0 = \omega_m) = 1 - \alpha_0 c\ell \quad (9)$$
$$T_0{}'(\Omega_0 = \omega_m) = 0 \quad (10)$$
$$T_0{}''(\Omega_0 = \omega_m) = 2\,\alpha_0 c\ell/\gamma^2 \quad (11)$$

From equation 8, if $T_0{}''$ is 0, the value of $\Omega_0$ can be obtained from the following equation (12).

$$\Omega_0 = \omega_m \pm \gamma/\sqrt{3} \quad (12)$$

At this time $T_0{}'$ becomes a maximum or a minimum.

(2) Effect of laser intensity modulation

In the above discussion, consideration has been given to modulation of the laser modulation frequency only, but when the drive current of a semiconductor is modulated, the intensity of the oscillation is also subjected to modulation at the same time. For this reason, in a signal which has been detected by phase sensitivity, unrelated components are added by absorption.

Now, when the drive current of a semiconductor laser is modulated at a frequency $\omega$, the oscillation intensity I for the oscillation frequency given by equation (4) is given by the following equation (13).

$$I = I_0 + \Delta I \cos(\omega t + \phi) \quad (13)$$

where

$I_0$          :central intensity of laser output

and $\Delta I$       :intensity modulation amplitude

Here, $\phi$ is the phase change produced during frequency modulation.

The intensity P of the laser beam after passing through methane is proportion to the oscillation intensity I and the transmission factor T, so that :

$$P = A \cdot I \cdot T \quad (14)$$

Here, the coefficient A is a constant which depends on the reflection conditions. In a system which utilizes an optional reflecting surface as a target, different values are obtained according to the distance to the target and its reflectance.

When equation (5) and equation (13) are substituted into equation (14), the following equation is obtained.

EP 0 449 573 A2

$$P = A [I_o + \Delta I \cos (\omega t + \phi)] \times [Co + \Delta\Omega T_o{}' \cos \omega t$$
$$+ \frac{(\Delta\Omega)^2}{4}T_o{}'' \cos 2\omega t] \quad (15)$$

providing that :

$$C_o = T_o + \frac{(\Delta\Omega)^2}{4}T_o{}'' \quad (16)$$

On expanding equation (15), the very small terms in the portion changed at the frequency ω are seen to disappear, to give two terms with the phase changed. :

$$A C_o\Delta I \cos (\omega t + \phi) + A I_o\Delta\Omega T_o{}' \cos \omega t \quad (17)$$

Accordingly, by phase sensitivity detection, selection of the phase of the reference signal changes the contribution of the two terms.

First, at the phase where the contribution of the first term in equation (17) is a maximum, if the signal obtained on detection of the fundamental wave is $P(\omega)_{max}$, then

$$P(\omega)_{max} = A [\Delta I \, C_o + I_o\Delta\Omega T_o{}' \cos \phi] \quad (18)$$

The second term in equation (18) is contributed by the second term in equation (17). Here, when the contribution of the second term is required,

$$\cos \omega t = \cos(\omega t + \phi - \phi)$$
$$= \cos \phi \cos(\omega t + \phi) + \sin \phi \sin(\omega t + \phi) \,\, .... (19)$$

is used.

Then, at the phase where the contribution of the first term in equation (17) is 0, if the signal obtained on detection of the fundamental wave is $P(\omega)_{min}$, then

$$P(\omega)_{min} = A I_o\Delta\Omega T_o{}' \sin\phi \quad (20)$$

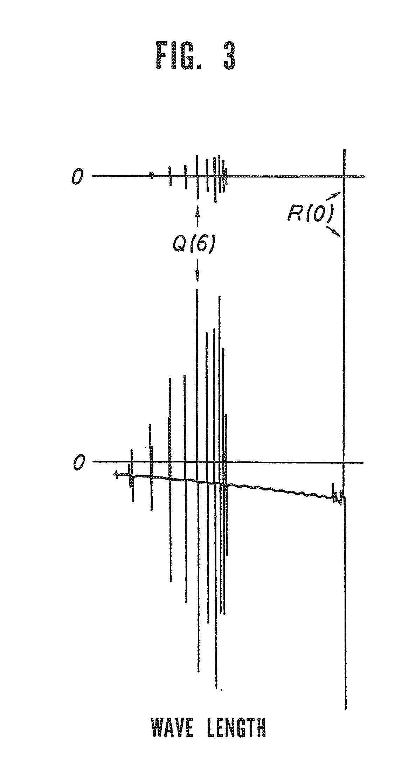

The upper stage and the lower stage in FIG.3 correspond to equations (20) and (18) and show the respective fundamental wave detection output at the points where the intensity modulation signal becomes a maximum and a minimum respectively.

Next, the method for detection of methane will be explained, based on the foregoing preliminary considerations.

The absorption of methane can be detected from the phase sensitivity detection signal at the fundamental wave or double wave of the transmitted beam with the laser drive current modulated at the frequency ω. In all cases, in order to obtain the maximum sensitivity it is necessary to stabilize the central frequency of the laser at a position where the absorption line is previously set. This stabilization can be implemented by passing part of the laser beam through a reference cell filled with methane.

First, in the case where the methane is detected by detection of the fundamental wave, the central frequency $\Omega_o$ must be stabilized at the frequency given by equation (12). For this reason, the second derivative signal of the beam which has passed through the reference cell, specifically, the double wave detection signal, is taken as an error signal, so it is desirable that the laser frequency be controlled so that this becomes 0.

In the case where the methane is detected by detection of the double wave, the central frequency $\Omega_o$ must be stabilized at the center of the absorption line. For this reason, the fundamental wave detection signal $P(\omega)_{min}$, which is given by equation (20), is measured by the beam which has passed through the reference cell. It is desirable that the laser frequency be controlled so that this becomes 0.

The laser frequency can be controlled from the feedback of the error signal to the temperature and the drive current.

It has been confirmed that either of the abovementioned two methods can be utilized in practice, but in the following embodiments the frequency is stabilized at the center of the absorption line by the fundamental wave detection signal, and a methane detection method has been adopted which uses the double wave detection signal.

After the laser frequency is stabilized at the center of the methane absorption line, the cos 2 ωt component from the beam detection signal, after it has passed through the measurement atmosphere, is detected by phase sensitivity detection, and the signal obtained, P(2 ω), becomes:

$$P(2 \omega) = A I_0 (\Delta\Omega)^2 T_0{}'' /4$$
$$= A I_0 (\Delta\Omega)^2 . \alpha_0 \, c\ell/ 2\gamma^2 \quad .....(21)$$

6

and is proportional to the product $c\ell$ of the methane concentration c and the optical path length $\ell$. Specifically, the methane is detected from the double wave detection signal. If the coefficient A is a constant, the quantitative measurement of methane can be made directly from $P(2\omega)$. However, under the measurement conditions when A is a variable, a quantitative measurement cannot be made directly.

In the state whereby the laser frequency is stabilized at the center $\omega_m$ of the methane absorption line, when $P(\omega)_{max}$ is measured by detection of the fundamental wave, because $T_0' = 0$ from equation (8):

$$P(\omega)_{max} = A\,\Delta I\,C_0$$
$$= A\,\Delta I \qquad \ldots\ldots (22)$$

Accordingly, examining the ratio R between $P(2\omega)$ and $P(\omega)_{max}$ shows that:

$$R = P(2\omega)\,/\,P(\omega)_{max}$$
$$= \frac{I_0(\Delta\Omega)^2\,\alpha_0}{2\Delta I \gamma^2} \cdot c\ell \qquad \ldots\ldots (23)$$

The constant A which is dependent on the reflection conditions is not included in this R. Therefore, the product c of the methane concentration c and the optical path length can be obtained from R which is not related to the reflection conditions.

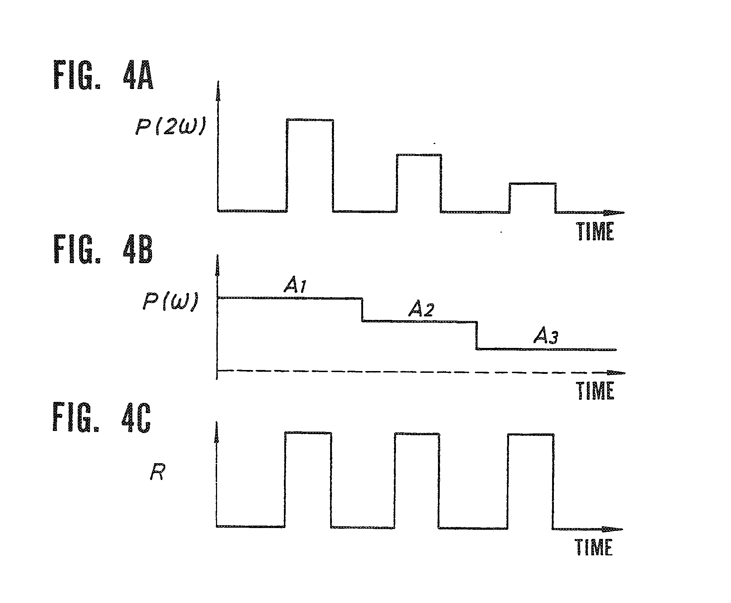

FIGs.4A, 4B, 4C show the changes in the signals $P(2\omega)$ and $P(\omega)_{max}$ and their ratio R, obtained when the constant A which is dependent on the reflection conditions is changed, for a constant volume of methane. However, these are related to the three values of A, which are $A_1)$, $A_2)$, and $A_3)$. As shown in FIG.4A and FIG.4B, even when $P(2\omega)$ and $P(\omega)_{max}$ change, the ratio R, as shown in FIG.4C, remains constant regardless of the reflection conditions. Specifically, in the state where the laser frequency is stabilized at the center of the absorption line, methane can be measured quantitatively by simultaneous fundamental wave detection and double wave detection.

In this manner, the concentration of a gas, unaffected by the reflection conditions, can be reliably measured by means of the present invention.

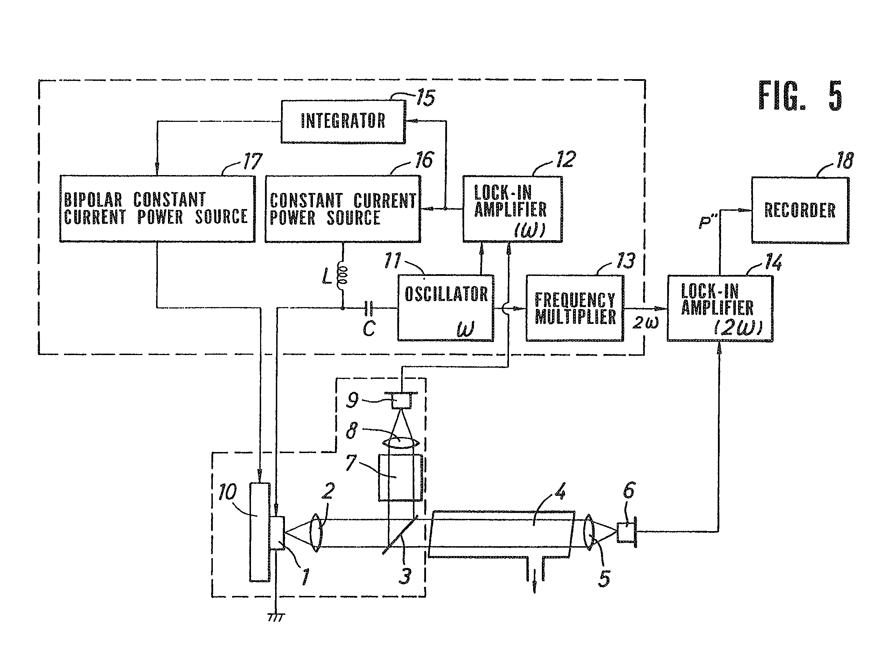

FIG.5 is a block diagram of an embodiment of the gas detection device of the present invention for which the object is the quantitative measurement of methane.

Now referring to FIG.5, the gas detection device of the present invention comprises a semiconductor laser 1; a collimator lens 2 for converting an laser beam generated by the semiconductor laser 1 into parallel beams; a beam splitter 3 for splitting the laser beam; a test cell 4 for holding a gas containing an unknown concentration of methane, in which the methane gas concentration can be regulated; a condensing lense 5 which condenses the laser beam passing through the methane cell 4; a beam detection apparatus 6 such as a PIN photodiode or the like which detects the intensity of the laser beam; a reference cell 7 containing a gas which includes a known concentration of methane; a condensing lens 8 which concentrates the laser beam passing through the reference cell 7; a beam detection apparatus 9 such as a PIN photodiode or the like which detects the intensity of the laser beam passing through the reference cell 7; a Peltier element 10 for controlling the temperature of the semiconductor laser 1; an oscillator 11 for generating a reference signal of frequency $\omega$; a lock-in amplifier 12 which is synchronized with the frequency $\omega$ and detects components output from the beam detection apparatus 9; a frequency multiplier 13 which doubles the frequency $\omega$; a lock-in amplifer 14 which is synchronized at the frequency $2\omega$, double the frequency $\omega$, and detects components output from the beam detection apparatus 6; an integrator 15 which integrates the output from the lock-in amplifier 12; a constant current power source 16 which controls an output current corresponding to the output of the lock-in amplifier 12 to provide a constant current; a bipolar constant current power source 17 which outputs a constant current of either a positive or negative polarity based on the output of the integrator 15; and a recorder 18 which records the output ($P(2\omega)$) of the lock-in amplifier 14.

The operation of this gas detection device will now be explained.

When the modulated frequency $\omega$ is high, the detected S/N ratio can also be expected to be high, therefore 25 MHz is selected as the oscillation frequency $\omega$ of the oscillator 11. A sine wave modulated power source which outputs 25 MHz from the oscillator 11 is added to the constant current from the constant current power source 16 via a condenser C, to drive the semiconductor laser 1. An inductance L is connected to the output side of the constant current power source 16 to avoid any effects from the output of the oscillator 11.

7

The frequency multiplier 13 doubles the frequency $\omega$ (25 MHz) of the reference signal output by the oscillator 11, to provide a reference signal of 50 MHz.

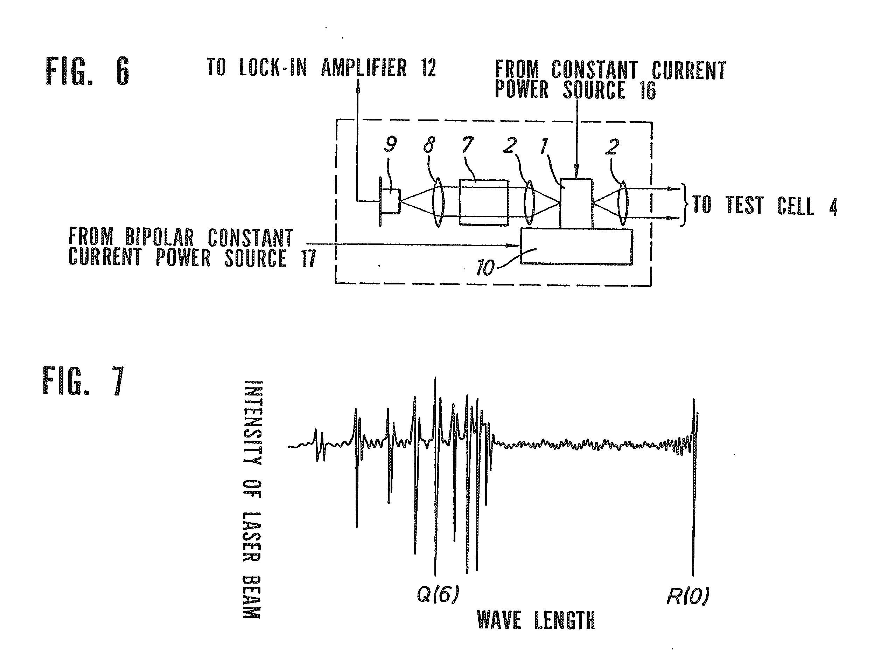

First, nitrogen gas at one atmosphere pressure containing 1% methane is filled into the test cell 4, and a double wave detection signal becomes as shown in FIG.7 when the frequency of the semiconductor laser 1 is swept. As can be understood from this drawing, a Q(6) line in the methane absorption line gives the largest signal, so that within the measured range, the Q(6) line is seen to be the most effective as the line used to detect methane. Accordingly, in order to stabilize the oscillation frequency of the semiconductor laser 1 centered around the Q(6) line, a gas mixed with methane is filled into the reference cell 7 at a total pressure of one atmosphere, and the output from the beam detection apparatus 9 is detected by the lock-in amplifer 12. The reference wave detection signal $P(\omega)_{min}$ is treated as an error signal and is integrated in the integrator 15. Using this integrated value, a positive or negative current flows from the bipolar constant current power source 17 to the Peltier element 10 and controls the temperature of the semiconductor laser 1. At the same time, the constant current power source 16 controls the drive current of the semiconductor laser 1, based on the output from the lock-in amplifier 12.

In this manner, after the oscillation frequency of the semiconductor laser 1 is stabilized centered around the Q(6) line, $P(2\omega)$ is measured from the lock-in amplifier 14 synchronized with the frequency $2\omega$ output from the beam detection apparatus 6, and the methane gas in the test cell 4 is detected. $P(2\omega)$ is recorded in the recorder 18. As can be understood from equation (21 ), the constant A, which is dependent on the reflection conditions, is not included in $P(2\omega)$, but in the case where A is a constant which is not changed by the measurement environment, the product $c\ell$ of the methane concentration c and the optical path length $\ell$ can be obtained. If $\ell$ is known the methane concentration c can be measured.

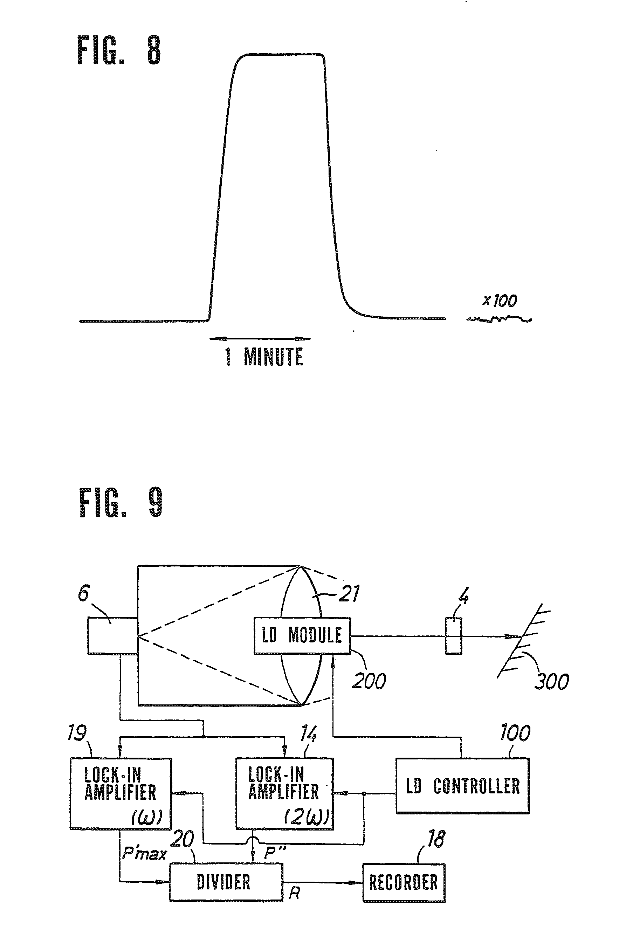

By means of the method outlined above, the oscillation frequency of the semiconductor laser 1 is set at the center of the Q(6) line, and then, initially from a vacuum state, nitrogen gas at one atmosphere pressure containing 1% methane is filled into the test cell 4, then is evacuated. The double wave detection signal obtained at this time has the form shown in FIG.8. Noise magnified 100 times is shown on the right side of this drawing. From FIG.7 the SN ratio is about 4000. If the detection threshold SN ratio is taken as 1, the product $c\ell$ of the methane concentration c and the optical path length $\ell$ which can be detected is calculated to be 1 x 3 ppm x m. This sensitivity is comparable with the sensitivity obtained using a two-wave-length oscillator He - Ne laser.

In the above embodiment, a multiple reflection cell of a beam path length of 30 m, in which the incident laser beam is reflected a plurality of times by mirrors, was used as the methane cell 4. When tests were run after filling the cell with air containing 6 ppm of methane, the methane could be measured at an SN ratio of 150. The concentration of methane which can be measured in this case is calculated to be about 10 ppb. With methods using multiple reflection cells in this manner, and the like, the detection sensitivity is greatly improved if a long beam path is provided.

It is known that a semiconductor laser emits a laser beam in both the forward and backward directions. In view of this, the optical unit comprising the semiconductor laser 1, the collimator lens 2, the beam splitter 3, the reference cell 7, the condensing lens 8, the beam detection apparatus 9, and the Peltier element 10, which is shown in the lower portion of FIG.5 enclosed by a dashed line, can be modified as illustrated in FIG.6 to provide an optical unit comprising the semiconductor laser 1, a pair of collimator lenses 2, the reference cell 7, the condensing lens 8, the beam detection apparatus 9, and the Peltier element 10.

FIG.9 illustrates another embodiment of the gas detection device of the present invention for remote quantitative measurement of methane, which utilizes an arbitrary reflecting surface. Reference numerals in the drawing designate parts identical or corresponding to the parts in FIG.5.

In this embodiment, the laser beam generated in the laser beam power source first passes through the measurement atmosphere, then is reflected from the reflecting surface. The reflected light is detected and the concentration of the methane in the measurement atmosphere is measured. The main structural elements of this embodiment are almost identical to those of the embodiment shown in FIG.5. However, an LD controller 100 comprises the oscillator 11, the lock-in amplifier 12, the frequency multiplier 13, the integrator 15, the constant current power source 16, and the bipolar constant current power source 17 of FIG.5. An LD module 200 comprises the semiconductor laser 1, the collimator lens 2, the beam splitter 3, the reference cell 7, the condensing lens 8, the beam detection apparatus 9, and the Peltier element 10 of FIG. 5.

The points of difference in configuration between this embodiment and the embodiment illustrated in FIG.5 are as follows. A large-aperture condensing lens 21 is provided for condensing the laser beam which passes through the test cell 4 and reflects from the reflecting surface 300. Also provided are an additional lock-in amplifier 19 which detects the output $(P(\omega)_{max})$ from the beam detection apparatus 6 and synchronizes this output with the modulated frequency $\omega$ in parallel with the lock-in amplifier 14, as well as a divider 20 which divides the output $P(2\omega)$ from the lock-in amplifer 14 by the output $P(\omega)_{max}$ from the lock-in amplifer 19 to obtain the ratio $R = P(2\omega) / P(\omega)_{max}$, to eliminate any effects from changes in the measurement environment. The output R from the divider 20 is recorded in the recorder 18.

The operation of this embodiment is essentially the same as the operation of the embodiment shown in FIG.5, but, as can be understood from the abovementioned equation (23), the constant A, which is dependent upon the reflection conditions of the measurement environment, is not included in the ratio R obtained from the divider 20, so that the product $c\ell$ of the concentration and the optical path length can be measured without receiving any effect from the reflection conditions.

This embodiment can be utilized as a portable gas detection device, as opposed to the embodiment of FIG.5, which is a permanently mounted model. It can detect gas leaks when the laser beam is directed into the atmosphere to be measured.

Both the abovementioned embodiments use the fundamental wave detection signal from the modulated frequency of the laser beam to stabilize the oscillation frequency of the semiconductor laser, and they detect the gas concentration from the double wave detection signal, but, conversely, the double wave detection signal may be used to stabilize the oscillation frequency of the semiconductor laser, and the fundamental wave detection signal to detect the gas concentration. In this case, the lock-in amplifier 12 may be synchronized at the frequency $2\omega$ and the lock-in amplifier 14 at the frequency $\omega$.

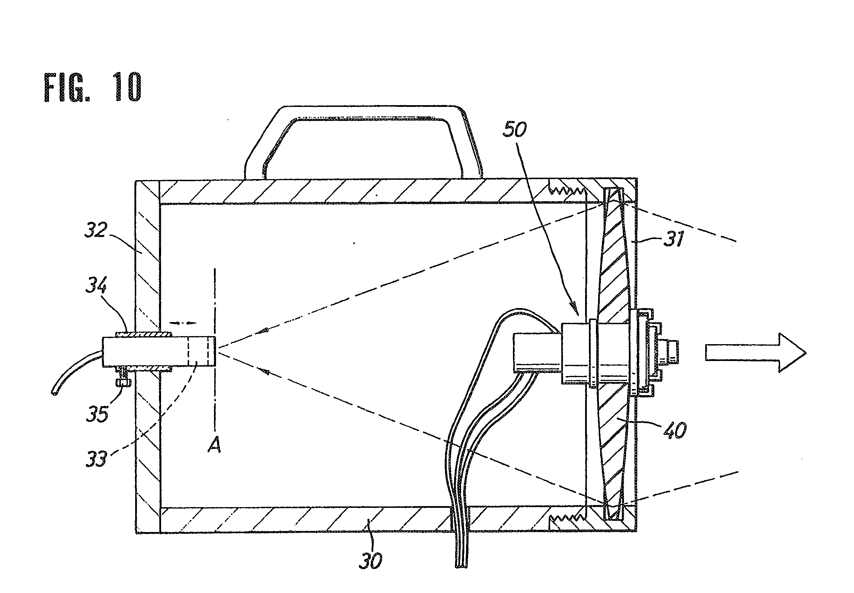

FIG.10 illustrates one embodiment of a portable model of the gas detection device for detecting methane gas shown in FIG. 8.

On this gas detection device, a unit ring 31, in which is mounted a condensing lens 40 and a laser generation module 50, is screwed onto the front end (the right end in the drawing) of a tubular casing 30, while a plate 32 is attached with screws to the rear end (the left end in the drawing) so that the inside of the casing is hermetically sealed. A sleeve 34 which houses a beam detection apparatus 33 comprising a PIN photodiode or the like for detecting the intensity of a reflected laser beam is mounted at the center of the plate 32 in a manner allowing a freely advancing and retreating movement of the beam detection apparatus 33 in the directions indicated by the arrows.

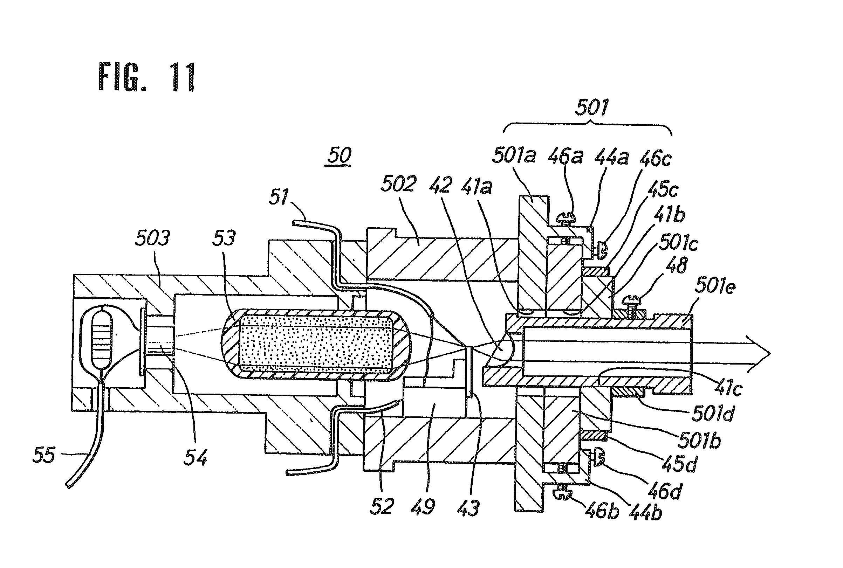

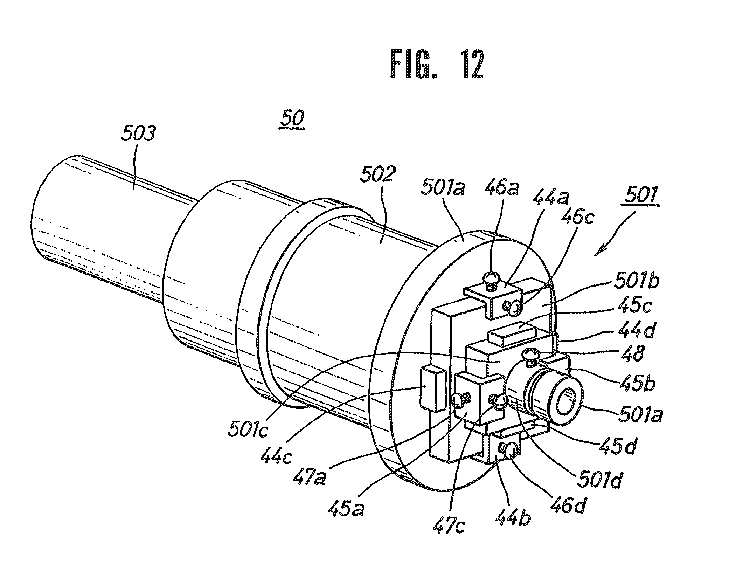

Now referring to FIG.11, the structure of the laser generation module 50 will be explained. FIG.12 is a perspective view of the laser generation module shown in FIG.11, viewed from the front.

The laser generation module 50 comprises an optical axis adjustment block 501, an aluminum-walled tube 502, and a stepped aluminum sleeve 503, all of which are mounted and secured on a common centerline.

The optical axis adjustment block 501 comprises a circular plate 501a with a center opening 41a, which is secured to the sleeve 502; a rectangular y-axis adjusting plate 501b with a center opening 41b, which slideably contacts the plate 501a, for adjusting the optical axis in the y-axis direction (the vertical direction in the drawing); a rectangular x-axis adjusting plate 501c with a center opening 41c, which slideably contacts the y-axis adjusting plate 501b for adjusting the optical axis in the x-axis direction (the direction perpendicular to the paper in the drawing); and a ring 501d which contacts the x-axis adjusting plate 501c. The sleeve 501e penetrates and is enclosed by the center opening 41a in the plate 501a, the center opening 41b in the y-axis adjusting plate 501b, the center opening 41c in the x-axis adjusting plate 501c, and the ring 501d. A collimating lens 42 with a diameter of 5 mm, and a focal length of 4.6 mm, for converting the laser beam into parallel beams, is mounted in the inner end (the left end in the drawing) of the sleeve 501e, inclined at an angle of about 30°. In FIG. 11, the laser beam emitted from the semiconductor laser 43 is polarized in the direction perpendicular to the surface of the drawing, so that the collimating lens 42 can rotate 90° around the optical axis from the position shown in the drawing to reduce the reflection loss. The position of the collimating lens can also be adjusted vertically, laterally, and longitudinally.

A pair of opposing right-angled leaves 44a, 44b are formed close to the upper and lower peripheral edges, and a pair of guide leaves 44c, 44d are formed close to the left and right peripheral edges on the outer vertical surface of the circular plate 501a. A pair of opposing right-angled leaves 45a, 45b are formed on the left and right sides close to the peripheral edges on the outer vertical surface of the y-axis adjusting plate 501b. Also, as shown in FIG.11, a pair of guide leaves 45c, 45d are formed close to the top and bottom peripheral edges on the outer vertical surface of the y-axis adjusting plate 501b. A pair of adjusting screws 46a, 46b for positional adjustment in the y-axis direction of the y-axis adjusting plate 501b, and a pair of set screws 46c, 46d for securing the y-axis adjusting plate 501b, penetrate tapped holes in the leaves 44a, 44b of the circular plate 501a. An adjusting screw 47a (see FIG.12) for positional adjustment in the x-axis direction of the x-axis adjusting plate 501c, and a set screw 47c for securing the x-axis adjusting plate 501c penetrate tapped holes in the leaves 45a, 45b of the y-axis adjusting plate 501b.

In addition, a set screw 48 is provided in the ring 501d for securing the sleeve 501e after positional adjustment in the z-axis direction (the lateral direction in the drawing).

Next, the semiconductor laser 43 and a Peltier element 49 for controlling the temperature of the laser 43, thermally bonded into a unit through a copperplate block and an aluminum chip, are positioned on the bottom section of the inner surface of the sleeve 502. The thermal conduction time constant is about one second. A pair of external electrical lead wires 51, 52 are connected to the semiconductor laser 43 and the Peltier element 49.

A methane reference cell 53 is positioned inside the stepped sleeve 503. Methane gas at a partial pressure of 200 Torr and nitrogen gas are filled at a pressure of one atmosphere into a pyrex tube 10 mm in diameter of the methane reference cell 53 which is then sealed. Both end surfaces of the pyrex tube are treated to provide thick walls which play the role of lenses. A beam detection device 54 for detecting the intensity of the laser beam passing through the methane reference cell 53 is positioned in the rear end of the sleeve 503. A lead wire 55 is connected to the beam detection device 54. The laser generation module 50 with this configuration is interposed in an opening in the center of the condensing lens 40 and is secured in the lens by the application of an adhesive.

The method of operating the methane gas detection device of FIG.10 which is incorporated in the laser generation module 3 in the present invention will next be explained.

Before the device is operated the optical axis and the focal point must be adjusted. To do this, the sleeve 34 is removed from its mounting on the plate 32 which forms the rear section of the cylindrical casing 300, and, in its place, a monitoring sleeve to which a semitransparent tape is applied on the inside of the front end, is inserted without the beam detection apparatus into the center opening of the plate 32 to a suitable position.

First, the beam detection apparatus (2 cm effective diameter) is positioned about 5 meters in front of the gas detection apparatus, and the position of the beam detection apparatus is adjusted so that the optical image falls on the center of the semitransparent tape applied to the front end of the sleeve 34.

Next, the laser beam emitted in the forward direction from the semiconductor laser 43 is converted to parallel beams by the collimator lens 42 which pass through the sleeve 501e in the forward direction. The laser beam emitted in the rear direction from the semiconductor laser 43 passes through the methane reference cell 53 and its intensity is detected by the beam detection apparatus 54 positioned at the rear.

The position of the collimator lens 42 is adjusted so that the forward projected laser beam strikes the beam detection apparatus positioned about 5 meters forward. This adjustment is made in the following manner.

Specifically, while monitoring the output from the beam detection apparatus positioned in front of the gas detection device with an oscilloscope or a voltmeter, the output is adjusted to a maximum by releasing the set screw 47c for the x-axis adjusting plate 501c, moving the x-axis adjusting plate 501c horizontally, specifically in the x-axis direction, by using the adjusting screw 47a then retightening the set screw 47c after the maximum position is reached. In the same manner, an adjustment is made for the y-axis adjusting plate 501b by releasing the set screws 46c, 46d, moving the y-axis adjusting plate 501b vertically, specifically in the y-axis direction, by using the adjusting screws 46a, 46b, then retightening the set screws 46c, 46d after the maximum position for the output of the beam detection apparatus is reached. Adjustment in the longitudinal direction (the left-right direction in FIG.11) is made by loosening the set screw 48, moving the sleeve 501e in the longitudinal direction until the output from the beam detection apparatus is at a minimum, then retightening the set screw 48. This completes the optical axis adjustment.

At this point, the monitoring sleeve is removed from the plate 32 at the rear of the methane gas detection device, and the sleeve 34 on which is positioned the beam detection apparatus 33 is reinserted to the same position and resecured to the plate 32 with a set screw 35. As a result, the laser beam reflecting from the target strikes the beam detection apparatus 33. The operator observes the output from the beam detection apparatus 33 using a separately-provided monitor, and slides the sleeve 34 in and out in the axial direction until the maximum output value is obtained. The set screw 35 is tightened at this maximum point. This completes the sensitivity adjustment operation. Because it is unnecessary to rigidly constrict the focal point of the reflected beam at the beam detection apparatus 33, even if the distance to the target varies slightly, it is unnecessary to readjust the position of the beam detection apparatus 33.

This completes the entire adjustment operation. To detect methane leaks, the laser beam is reflected toward the measurement atmosphere which is the reflection target about five meters in front of the gas detection device. This reflected laser beam is received and its intensity measured by the beam detection apparatus 33. The intensity of the laser beam which passes through the methane reference cell is detected at the beam detection apparatus 53 which is provided at the rear of the laser generation module 50, and by processing these signals from the two sets of beam detection apparatus, the concentration and beam path length of the methane gas in the measurement atmosphere is obtained. Because the detection of the concentration of this gas is not the essential point of the present invention, no further explanation will be given here. However, if required, reference should be made to Japanese Patent Application No. 2-78498, which is a previous publication by the inventors of the present invention.

With the abovementioned embodiment of the present invention, in the adjustment of the focal point of the gas detection device, the target distance was determined in advance and adjusted manually. However, if the autofocus technology which is widely used in the camera industry and the like were utilized it would be possible to make the sensitivity adjustments automatically. This would expand the measurement object sphere considerably. The gas which is the object of the measurement is not restricted to methane gas. Other gases can, of course, be handled.

As outlined in the foregoing explanation, in the present invention a semiconductor laser is used in which the wave length and output of the generated laser beam correspond to the drive current and the temperature. A laser beam can be generated in which the wave length and output are modulated at a special frequency centered around a specified current. One or both of the drive current and temperature of the semiconductor laser are controlled so that the modulated frequency of the fundamental wave detection signal, or of the double wave detection signal, becomes zero. The device is constructed so that the laser beam is passed through a measurement object atmosphere containing an unknown concentration of a gas whereby the concentration of the gas can be detected with high sensitivity and accuracy by the double wave detection signal or the fundamental wave detection signal of this laser beam. In addition, accurate gas concentration detection is possible free from effects of the measurement environment by detecting the fundamental wave component and the double wave component of the laser beam frequency and getting the ratio between the two. Accordingly, the present invention can be effectively utilized in a portable unit for detecting gas leaks and the like throughout any type of atmosphere. Furthermore, it is also possible to utilize the present invention to selectively detect the concentration of a specific gas in an atmosphere which is a mixture of many gases.

The laser generation module of the present invention comprises a collimator lens for converting an laser beam into parallel beams, positioned on one side of a semiconductor laser; a sealed reference gas cell, containing a gas which is the measurement object, and a beam detector apparatus positioned on the opposite side of the semiconductor laser for detecting the intensity of the laser beam passing through the reference gas cell; and an optical axis adjusting means for adjusting the direction of the laser beam emitted from the module, with the collimator lens displaced in a plane at right angles to the optical axis. The gas detection device comprises the laser generation module mounted in the center of the condensing lens, and a beam detection means which detects the intensity of the reflected laser beam condensed by the condensing lens in the direction in which the laser beam is emitted from the module, positioned on the reflecting side. Therefore, a small gas detection device, and, in particular, a portable gas detection device can be provided of simple construction, without using a plurality of mirrors, and with a high condensing efficiency.

## Claims

1. A gas detection devise comprising:

   a laser which generates a laser beam of a wave length and intensity corresponding to a drive current and the temperature;

   a laser drive circuit which modulates the drive power source of the laser at a specified amplitude centered around a specified temperature and a specified current value;

   a means of stabilizing the wavelength by which the central wavelength of the laser beam generated by the laser is stabilized at a specific position on a special gas absorption line;

   a beam detection apparatus which detects the intensity of the laser beam after the laser beam passes through the measuring object gas atmosphere; and

   a measuring means which performs a quantitative measurement of a specific gas based on the output of the beam detection apparatus.

2. A gas detection device according to claim 1 which controls either the drive current or the temperature or both of a semiconductor laser so that the fundamental wave detection signal of the modulation frequency of the laser beam becomes zero, or the double wave detection signal becomes zero.

3. A gas detection device according to claim 1 wherein the laser is a semiconductor laser.

4. A gas detection device provided with a laser generation module, wherein :

   a semiconductor laser;

   a collimator lens for converting an laser beam emitted by a semiconductor laser in one direction into parallel beams;

   a reference gas cell in which is the object gas is sealed and which partially absorbs a laser beam from the semiconductor laser emitted in the opposite direction and

   a beam detection apparatus which detects the intensity of the laser beam after the laser beam passes through the measuring object gas atmosphere;

are hermetically sealed inside a tube and positioned on the same optical axis; and wherein;

the collimator lens is displaced in a plane at right angles to the optical axis; and

the laser generation module is provided with an optical axis adjustment means which adjusts the direction of the laser beam emitted by the module.

5. A gas detection device according to claim 4 wherein the semiconductor laser is provided with a temperature control means.

6. A gas detection device according to claim 4 wherein the reference gas cell is a hermetically sealed tube with the walls of both end surfaces in the direction of progression of the laser beam thickened.

7. A gas detection device provided with a convergent lens which blocks one end of a tubular casing; wherein:

the laser generation module described in claim 1 is secured to the center section of the convergent lens so that the optical axes are in agreement;

the other end of the tubular casing is covered with a plate member, and

the beam detection means is disposed so that is supported by the plate member at a position where the reflected laser beam from the convergent lens in the tubular casing forms an image.

8. A gas detection device according to claim 7 wherein the beam detection means can be positionally adjusted in the axial direction of the tubular casing.

# FIG. 1A

# FIG. 1B

EP 0 449 573 A2

## FIG. 2A

TRANSMISSION FACTOR $T_0$

$2\gamma$

## FIG. 2B

FIRST DERIVATIVE $T_0'$

0

## FIG. 2C

SECOND DERIVATIVE $T_0''$

0

$$\omega_m - \frac{\gamma}{\sqrt{3}} \quad \omega_m \quad \omega_m + \frac{\gamma}{\sqrt{3}}$$

# FIG. 3

WAVE LENGTH

## FIG. 4A

$P(2\omega)$

TIME

## FIG. 4B

$P(\omega)$

$A_1$

$A_2$

$A_3$

TIME

## FIG. 4C

$R$

TIME

FIG. 5

INTEGRATOR 15

BIPOLAR CONSTANT CURRENT POWER SOURCE 17

CONSTANT CURRENT POWER SOURCE 16

LOCK-IN AMPLIFIER (ω) 12

RECORDER 18

L

C

OSCILLATOR ω 11

FREQUENCY MULTIPLIER 13

LOCK-IN AMPLIFIER (2ω) 14

P''

2ω

9

8

7

10

2

1

3

4

6

5

FIG. 6

TO LOCK-IN AMPLIFIER 12     FROM CONSTANT CURRENT
                            POWER SOURCE 16

9   8   7   2   1   2

TO TEST CELL 4

FROM BIPOLAR CONSTANT
CURRENT POWER SOURCE 17

10

FIG. 7

INTENSITY OF LASER BEAM

Q(6)                    R(0)

WAVE LENGTH

EP 0 449 573 A2

18

## FIG. 8

x100

1 MINUTE

## FIG. 9

**FIG. 10**

FIG. 11

EP 0 449 573 A2

# FIG. 12

EP 0 449 573 A2